# EUROPEAN PATENT SPECIFICATION

(11) **EP 0 696 014 B1**
(45) Date of publication and mention of the grant of the patent: **20.09.2000**
(21) Application number: 95304100.1
(22) Date of filing: 14.06.1995
(51) Int. Cl.: G06K 11/18, G06F 3/033

(54) **Pressure sensitive input device wearable around a human finger**
Druckempfindliche Dateneigabevorrichtung, die um einen menschlichen Finger getragen werden kann
Dispositif d'entrée de données sensible à la pression portable sur un doigt humain

(30) Priority: 28.07.1994 US 282135
(43) Date of publication of application: 07.02.1996
(73) Proprietor: Hewlett-Packard Company, Palo Alto, California 94304 (US)
(72) Inventor: Bunsen, Christopher M., Corvallis, OR 97330 (US)
(74) Representative: Colgan, Stephen James

(56) References cited:
- WO-A-91/07826
- FR-A- 2 709 575
- PATENT ABSTRACTS OF JAPAN vol. 012 no. 460 (P-795) ,5 December 1988 & JP-A-63 184129 (MANABU KODA) 29 July 1988,

## Description

### Field of the Invention

This invention relates to the electronics circuitry field. More particularly, this invention is a pressure sensitive input device wearable around a human finger.

### Background of the Invention

Early personal computers were not very fancy. They displayed textual data, such as letters and numbers, in orderly rows and columns. A user could quite easily manipulate this textual data though the use of a user interface device called a keyboard. More recent personal computers started supporting so called "graphical user interfaces", or "GUIs". These computers made it possible to display complex graphical information, such as overlapping viewports containing textual data and/or images, to a user. While it was theoretically possible to manipulate this "graphical user interface" through the use of a keyboard, most users found this to be a thoroughly frustrating experience and purchased a newfangled input device now commonly known as a mouse.

The mouse, unlike the keyboard, allowed for a cursor to be moved relatively easily from one position on the display to another position on a display. The user rested his/her palm on top of the mouse, grabbed the sides of the mouse with large portions of their thumb and "pinkie" finger, and moved the mouse across a mouse pad, often by moving their entire arm in the process.

While it was considerably easier manipulating a graphical user interface with a mouse than with a keyboard, many users still found the mouse to be awkward and frustrating. As the graphical user interface contained images of ever increasing granularity that required ever increasing complexity to manipulate, the mouse, like the keyboard, became more and more frustrating to use.

US Patent 4,954,817 points out that muscles of the human body are mapped in an orderly fashion to the human brain, but that some muscles have more "brain" mapped to them then others. The muscles in the thumb have a much higher degree of brain mapping than most other parts of the human body, including other parts of the human hand. In fact, it is widely understood that the opposable thumb is what sets human beings apart from others in the animal kingdom. The thumb, especially when used in conjunction with the index finger, is capable of very fine motor control.

US Patent 4,954,817 took advantage of this decidedly human attribute by disclosing a finger palette having an X and Y dimension worn around a index finger. A stylus worn around a thumb contacts the finger palette at a specific X-Y coordinate. This coordinate is transmitted to the computer display, and the cursor location on the display changes to correspond to this coordinate. While this device would appear to be an improvement over a conventional mouse, it is not without its problems. The palette is bulky and expensive to produce. A separate ring with a stylus tip must be worn on the thumb. The bulkiness of the palette requires it to be worn between the top and middle knuckles of the index finger, thereby requiring the thumb to make contact with the index finger in a relatively awkward position that results in sub-optimal motor control.

JP-63184129 discloses a device for input of graphics or symbols to a computer comprising a sheath connected to a main body. The application of pressure to a pressure switch on the sheath has the effect of placing pen to paper and subsequent movement of the sheath causes data to be input to the screen.

WO-A-91 07826 discloses a device for remote control of a computer which is attached to a human finger, for example using releasable straps.

### Summary of the Invention

A pressure sensitive input device, as claimed in claim 1 hereinafter, is a wearable sheath around a human finger, such as a thumb. The input device has a sheath with one end enclosed in a thimble-like fashion. The sheath contains a cap and a pressure sensor, such as force sensitive resistors. The input device communicates to an electronic device having a display, such as a computer, via an electronic device interface. When the pressure sensor detects pressure on the cap, the information displayed on the display is changed. Pressure in two dimensions (X and Y) on the cap is detected by the pressure sensor. Most commonly, the information that is changed on the display is the repositioning of a cursor on the display, although writing on the device can also be performed. The cursor is repositioned corresponding to the direction and magnitude of the pressure detected on the cap. Switches present on the sheath can be used to execute an operation corresponding to the position of the cursor on the display.

### Description of the Drawings

Fig. 1 shows the input device of the preferred embodiment of the invention, as worn by a human being.

Fig. 2A shows a side view of the sheath of the input device of the preferred embodiment of the invention.

Fig. 2B shows a side view of the sheath of the input device of an alternate embodiment of the invention.

Fig. 3 shows a top view of the sheath of the input device of the preferred and alternate embodiments of the invention.

Fig. 4A shows actuation of the input device of the preferred embodiment of the invention to control an electronic device via a wireless data link.

Fig. 4B shows actuation of the input device of an alternate embodiment of the invention to control an electronic device via a wired data link.

Fig. 4C shows actuation of the input device of an alternate embodiment of the invention to control an electronic device via a wireless data link contained in the sheath.

Fig. 5A shows a block diagram of the input device and electronic device of the preferred embodiment of the invention.

Fig. 5B shows a block diagram of the input device and electronic device of an alternate embodiment of the invention.

Fig. 6 shows actuation of the input device of an embodiment of the invention to control an alternate "pen based" electronic device via a wireless data link.

### Detailed Description of the Preferred Embodiment

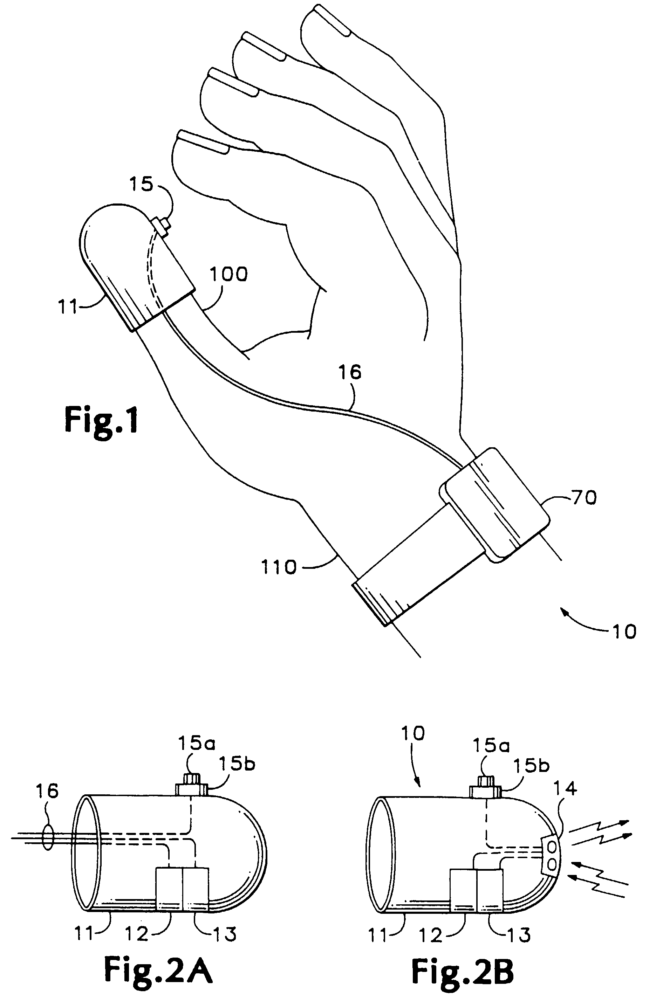

Fig. 1 shows input device 10 of the preferred embodiment of the invention, as worn by a human being. Input device 10 contains sheath 11, cap 15, cable 16, and electronic device interface 70. Sheath 11 is wearable around a human finger. Sheath 11 is preferably but optionally enclosed on one end in a thimble-like fashion preferrably placed on the tip of a user's thumb 100, as is shown in Fig. 1. Cable 16 connects cap 15 with electronic device interface 70. Electronic device interface 70 is preferably worn around user's wrist 110, similar to a wristwatch. In fact, network device interface 70 can be part of a wristwatch.

Fig. 2A shows a side view of sheath 11 of input device 10 of the preferred embodiment of the invention. Cap 15 contains upper cap portion 15a and lower cap portion 15b. Cable 16 is connected to lower cap portion 15b and switches 12 and 13.

Fig. 28 shows a side view of sheath 11 of input device 10 of an alternate embodiment of the invention. Like Fig. 2A, cap 15 contains upper cap portion 15a and lower cap portion 15b, and sheath 11 contains switches 12 and 13. But unlike Fig. 2A, sheath 11 also contains infrared port 14. Infared port 14 is connected to lower cap portion 15b and switches 12 and 13, and transmits wireless information to an electronic device equipped with another infared port, as will be discussed in more detail later.

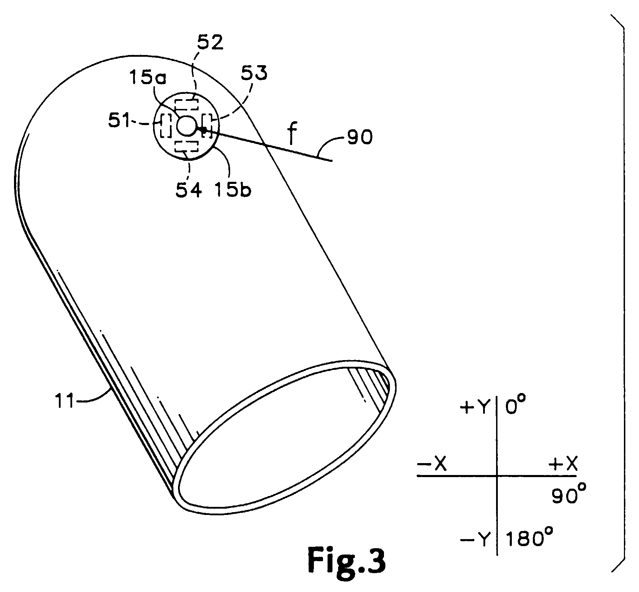

Fig. 3 shows a top view of sheath 11 of the input device of the preferred and alternate embodiments of the invention. The relative position of pressure sensors 51-54 are shown in dashed lines in Fig. 3, since these sensors are contained in and hidden from view by lower cap portion 15b. Pressure sensors 51-54 are part of pressure sensor 50, whose operation will be described in more detail later. While four sensors are shown, each oriented perpendicularly to its adjacent sensors, those skilled in the art will appreciate that more or fewer sensors could be used. In the preferred embodiment, pressure sensors 51-54 are force sensitive resistors, such as those manufactured by Interlink Electronics, although other components that can translate pressure into electronic signals, such as strain gauges, could also be used. The terms "force" and "pressure" shall be used interchangeably throughout the remainder of this document.

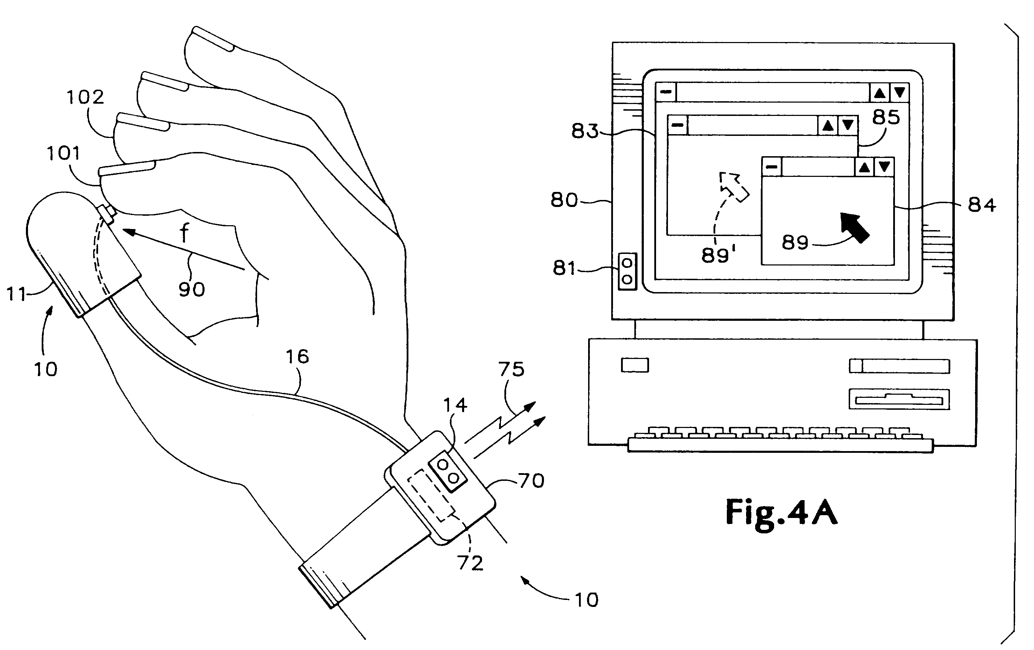

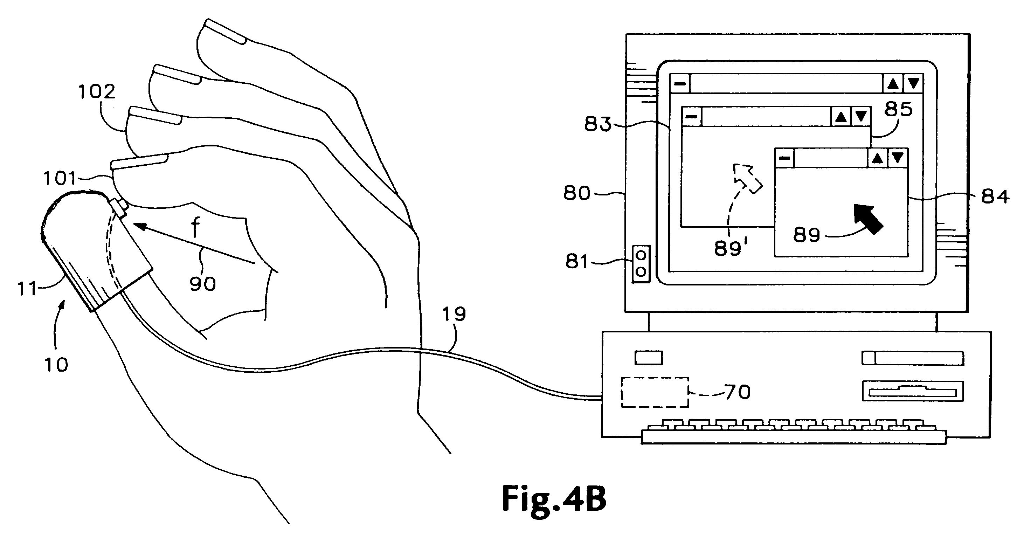

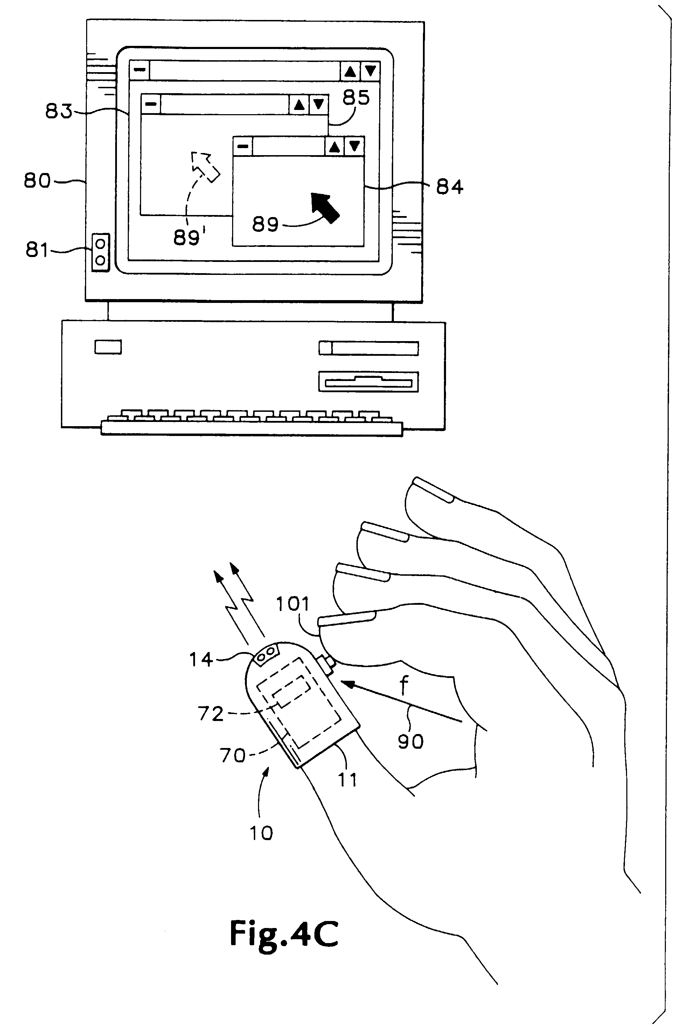

Fig. 4A shows how input device 10 of the preferred embodiment of the invention is actuated to control electronic device 80 via wireless data link 75. The user applies pressure to cap 15 with index finger 101. This pressure is sensed by pressure sensor 50, and is transmitted to electronic device 80 via infared port 14 in electronic device interface 70 over wireless link 75 to infrared port 81. When pressure is applied on upper cap portion 15a by index finger 101, such as force 90 shown in Fig. 3, the information displayed on display 83 of electronic device 80 is changed. Pressure in the X and Y directions on upper cap portion 15a is detected by pressure sensors 51-54. As shown in Fig. 4A, the information that is changed on the display is the repositioning of cursor 89 on display 83 to position 89'. Cursor 89 is repositioned corresponding to the pressure detected in the X and Y direction on upper cap portion 15a. In the example shown in Fig. 4, the user has applied force 90 to upper cap portion 15a to move cursor 89 to position 89' so she can move from viewport 84 to viewport 85. By then actuating switch 12 (on the underside of sheath 11, hidden from this view by the thumb), preferable with middle finger 102, an operation similar to a "click" or "double click" on a mouse button can be performed. In the example shown in Fig. 4A, actuating switch 12 twice in a rapid manner will result in the selection of viewport 85 as the active viewport. Those skilled in the art will appreciate that switches 12 and 13 could be located in electronic device interface 70 for actuation by one or more fingers of the opposite hand and still fall within the spirit and scope of the invention.

Fig. 4B shows actuation of the input device of an alternate embodiment of the invention to control an electronic device via a wired data link. In Fig. 4B, electronic device interface 70 is no longer contained in a watch-like device worn around the user's wrist; it is instead contained in electronic device 80. Wireless data link 75 of the preferred embodiment is replaced by cable 19. Cable 19 directly connects cap 15 to electronic device 80. This embodiment may be preferred in some applications where the cost of input device 10 needs to be kept to an absolute minimum.

Fig. 4C shows actuation of the input device of an alternate embodiment of the invention to control an electronic device via a wireless data link contained in sheath 11. In Fig. 4C, infared port 14 and electronic device interface 70 is no longer part of input device 10; it is instead contained in sheath 11. This embodiment may be preferred in some applications where the additional cost associated with putting electronic device interface 70 and infared port 14 in sheath 11 can be justified.

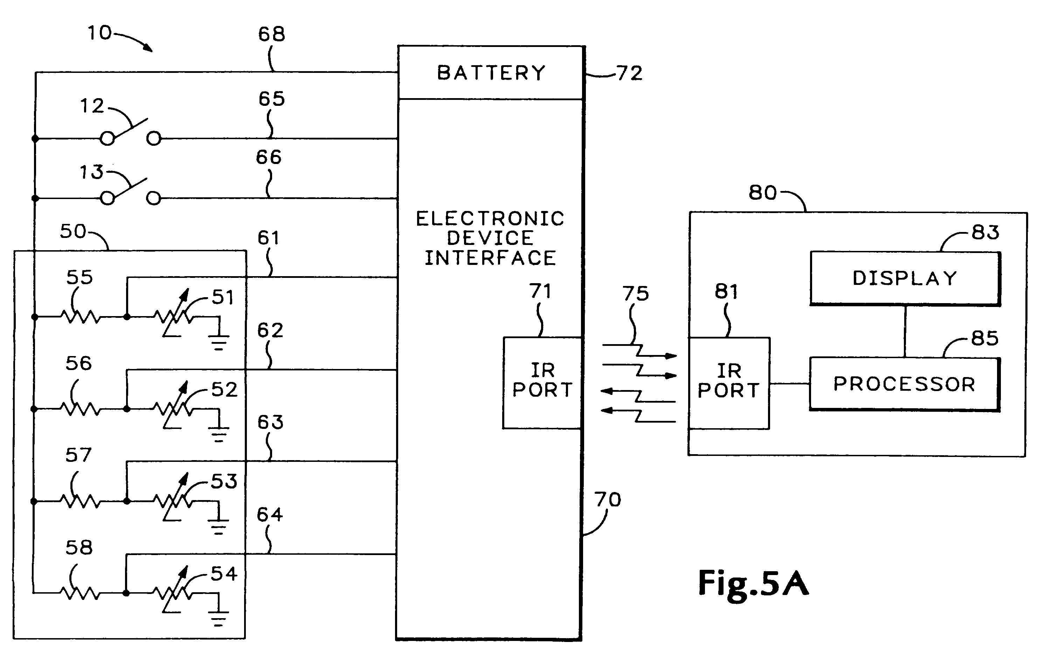

Fig. 5A shows a block diagram of input device 10 and electronic device 80 of the preferred embodiment of the invention shown in Fig. 4A and the alternate embodiment of the invention shown in Fig. 4C. Battery 72 (part of electronic device interface 70 in both embodiments) is connected to pressure sensor 50. As previously discussed, pressure sensor 50 includes force sensitive resistors 51-54. Pressure sensor 50 also includes fixed pull up resistors 55-58. Pull up resistors 55-58 form a voltage divider network with force sensitive resistors 51-54. The signals provided to electronic device interface 70 on input lines 61-64 are proportional to the force applied to force sensitive resistors 51-54. When force sensitive resistors 51-54 are oriented as shown in Fig. 3, the signal on input line 64 will be proportional to the force applied on cap 15 in a +Y direction of 0°. Likewise, the signal on input line 61 will be proportional to the force applied in a +X direction of 90°, the signal on input line 62 will be proportional to the force applied in a -Y direction of 180°, and the signal on input line 63 will be proportional to the force applied in a -X direction of 270°. For example, force 90 shown in Fig. 4A would result in a signal on input line 63 to indicate the -X directional component of force 90, and a signal on input line 64 to indicate the Y directional component of force 90. Those skilled in the art will appreciate that while two pairs of force sensitive resistors are used in the preferred embodiment ("X" resistor pair 51 and 53, and "Y" resistor pair 52 and 54), resistors 53 and 54 would not be necessary if resistors 51 and 52 were preloaded to a predefined amount of force, so that "negative pressure" on the resistors (e.g., force on resistors 51 and 52 from force 90 of Fig. 3) could be measured. In the preferred embodiment, the signals (if any) resulting from the "pair" of any force sensitive resistor measuring positive pressure is simply ignored, since the direction of the force on cap 15 can be uniquely determined from the signals resulting from the force sensitive resistors measuring positive pressure.

Through the combination of the signals on input lines 61-64, electronic device interface 70 can uniquely determine the direction of any X-Y force applied to cap 15, as well as the amount of force applied. Those skilled in the art will appreciate that electronic device interface 70 is similar in many respects to driver circuitry found in conventional input devices, such as mice and trackballs, that receive positional data from X-Y rollers or similar devices. This positional data is sent by electronic device interface 70 to electronic device 80 over wireless data link 75 (via IR ports 71 and 81) using a specific protocol, such as the Serial Infrared (SIR) Protocol used by Hewlett-Packard palmtop and superportable PCs, understandable by processor 85. Processor 85, responsive to signals sent to it over wireless data link 75, causes the information contained on display 83 to change, as was discussed in Fig. 4A with the change of the position of cursor 89 to position 89'.

Switches 12 and 13 operate in a manner similar to buttons on a conventional mouse. In the example discussed above in conjunction with Fig. 4A, pressing down on switch 12 twice in a rapid manner with middle finger 102 will result in the selection of viewport 85 as the active viewport.

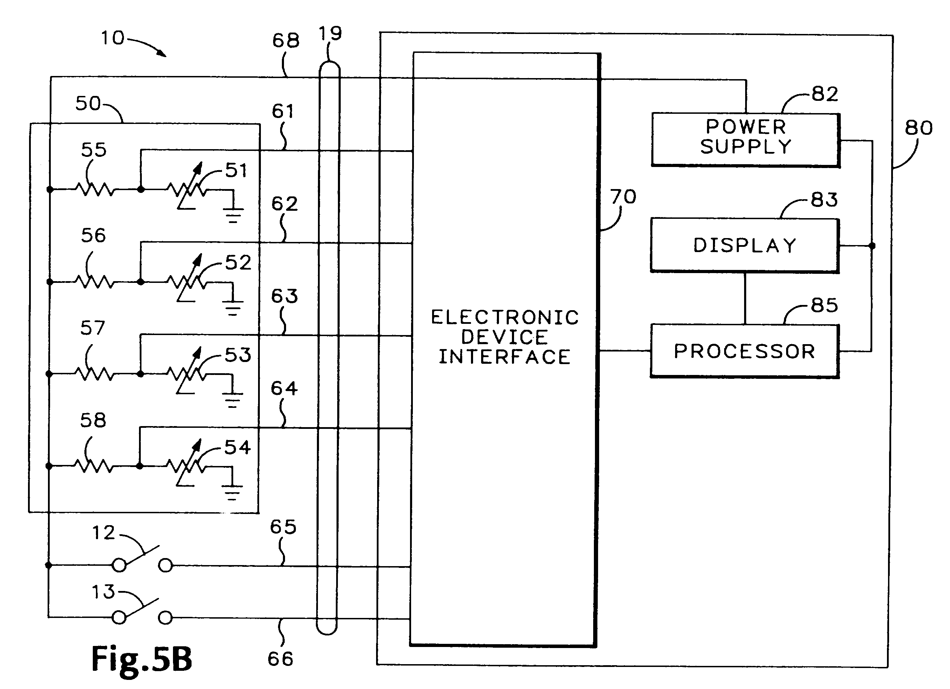

Fig. 5B shows a block diagram of the input device and electronic device of the alternate embodiment of the invention discussed previously in Fig. 4B. Electronic device interface 70, part of input device 10 in Fig. 5A, is shown in Fig. 5B contained in electronic device 80. Wireless data link 75 of the preferred embodiment is replaced by cable 19. Cable 19 provides power to input device 10 from power supply 82 via line 68. X and Y positional information and switch information from switches 12 and 13 is sent to electronic device interface 88 over cable 19 via lines 61-66.

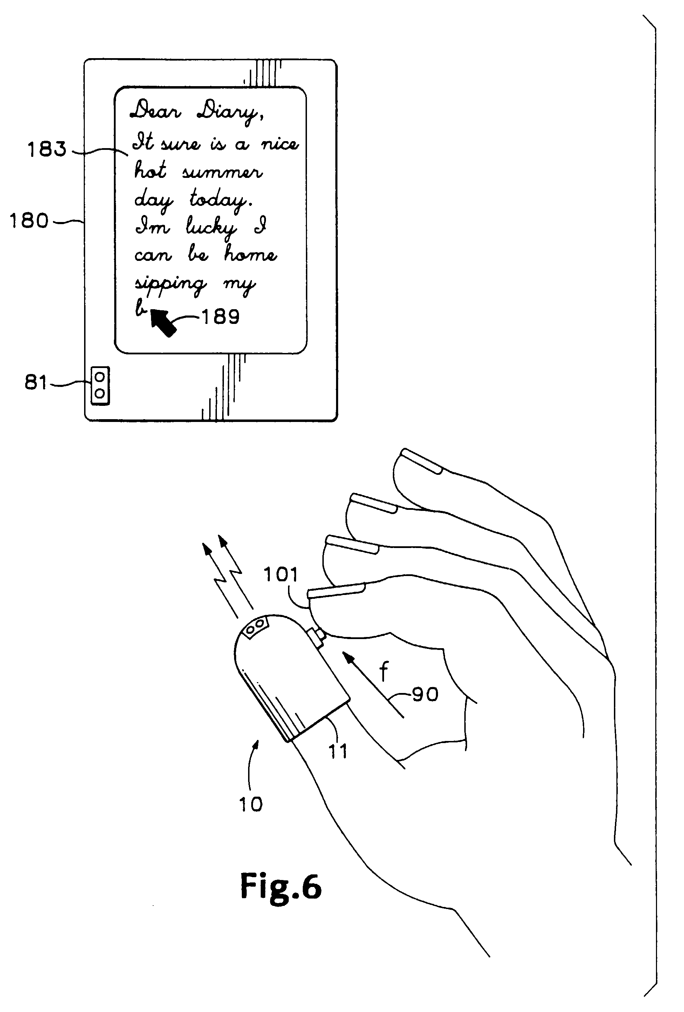

Fig. 6 shows actuation of input device 10 of an embodiment of the invention to control alternate "pen based" electronic device 180 via a wireless data link 75. Electronic device 180 is similar in some respects to electronic device 80, but lacks a keyboard as an input device and is normally smaller in size. In fact, electronic device 180 can fit in a human hand, or even be as small as a wristwatch. Electronic device 180 is capable of performing the popular personal digital assistant (PDA) function of "writing" on the device, similar to pen-based PDA's such as the Apple Newton, but without the pen or stylus. Instead, the user writes by applying pressure to cap 15 of input device 10, thereby moving cursor 180 along in much the same manner as a pencil is moved across a piece of paper when one is writing a letter or the like. While cursor 189 is helpful in providing positional feedback to a user, it is not required to be displayed to the user. Switches 12 and 13 can be used to control device 180 by scrolling down/up, selecting an item from a menu, etc. Those skilled in the art will appreciate that device 10 shown in Fig. 6 is particularly well suited for applications involving writing, due to the very fine motor control supported by the device.

## Claims

1. An input device (10) for an electronic device (80) having information displayed on a display (83), said input device comprising:
a sheath (11), wearable and closed around the tip of a human finger, further comprising:
a cap (15) situated on said sheath; and
a pressure sensor (51-54) for detecting pressure on said cap;
an electronic device interface (70), operatively coupled to said pressure sensor, for sending signals to said electronic device causing a cursor displayed thereon to move from a first position in a first direction to a second position, responsive to said pressure sensor detecting pressure on said cap in said first direction.

2. The input device of claim 1, wherein said sheath is wearable around the tip of a human thumb.

3. The electronic device of claim 2, wherein said pressure detected on said cap is intended to be supplied by a human index finger contacting the tip of said human thumb at its tip.

4. The electronic device of claim 1, wherein said pressure sensor detects pressure in an X and Y direction on said cap.

5. The input device of claim 1, further comprising:
a plurality of switches (12,13) contained in said sheath.

6. The electronic device of claim 1, wherein said electronic device interface is connected to said sheath and contained in said electronic device.

7. The input device of claim 1, wherein said electronic device interface further comprises:
an infrared port (71), said signals sent to said electronic device via said infrared port.

8. A method of moving a cursor displayed on a display (83) of an electronic device (80) through an input device (10) having a sheath (11) wearable and closed around the tip of a human finger, said sheath having a cap (15) situated on said sheath and a pressure sensor (51-54), said input device operatively connected to said electronic device, said method comprising the steps of:
said pressure sensor detecting pressure on said cap in a first direction; and
said electronic device moving the cursor from a first position in a first direction to a second position on said display, responsive to said pressure detected on said cap in said first direction.

9. The electronic device of claim 8, further comprising the step of:
transmitting signals corresponding to said pressure detected on said cap from said input device to said electronic device from an infrared port on said input device (71) to an infrared port on said electronic device (81).

## Patentansprüche

1. Eine Eingabevorrichtung (10) für eine Elektronikvorrichtung (80), die Informationen auf einer Anzeige (83) anzeigt, wobei die Eingabevorrichtung folgende Merkmale aufweist:
eine Hülle (11), die um die Spitze eines menschlichen Fingers tragbar ist und um dieselbe geschlossen ist, ferner mit folgenden Merkmalen:
einem Aufsatz (15), der auf der Hülle angeordnet ist; und
einem Drucksensor (51 - 54) zum Erfassen eines Drucks auf dem Aufsatz;
eine Elektronikvorrichtungsschnittstelle (70), die mit dem Drucksensor wirksam gekoppelt ist, zum Senden von Signalen zu der Elektronikvorrichtung, wodurch bewirkt wird, daß sich ein Cursor, der auf derselben angezeigt wird, ansprechend auf den Drucksensor, der einen Druck auf dem Aufsatz in einer ersten Richtung erfaßt, von einer ersten Position in der ersten Richtung in eine zweite Position bewegt.

2. Die Eingabevorrichtung gemäß Anspruch 1, bei der die Hülle um die Spitze eines menschlichen Daumens tragbar ist.

3. Die Elektronikvorrichtung gemäß Anspruch 2, bei der vorgesehen ist, daß der Druck, der auf dem Aufsatz erfaßt wird, durch einen menschlichen Zeigefinger geliefert wird, der an seiner Spitze die Spitze des menschlichen Daumens berührt.

4. Die Elektronikvorrichtung gemäß Anspruch 1, bei der der Drucksensor einen Druck in einer X- und Y-Richtung auf dem Aufsatz erfaßt.

5. Die Eingabevorrichtung gemäß Anspruch 1, die ferner eine Mehrzahl von Schaltern (12, 13) aufweist, die in der Hülle enthalten sind.

6. Die Elektronikvorrichtung gemäß Anspruch 1, bei der die Elektronikvorrichtungsschnittstelle mit der Hülle verbunden und in der Elektronikvorrichtung enthalten ist.

7. Die Eingabevorrichtung gemäß Anspruch 1, bei der die Elektronikvorrichtungsschnittstelle ferner einen Infrarotport (71) aufweist, wobei die Signale über den Infrarotport zu der Elektronikvorrichtung gesendet werden.

8. Ein Verfahren zum Bewegen eines Cursors, der auf einer Anzeige (83) einer Elektronikvorrichtung (80) mittels einer Eingabevorrichtung (10) bewegt wird, die eine Hülle (11) aufweist, die um die Spitze eines menschlichen Fingers tragbar ist und um dieselben geschlossen ist, wobei die Hülle einen Aufsatz (15), der auf der Hülle angeordnet ist, und einen Drucksensor (51 - 54) aufweist, wobei die Eingabevorrichtung mit der Elektronikvorrichtung wirksam verbunden ist, wobei das Verfahren die folgenden Schritte aufweist:
Erfassen eines Drucks auf dem Aufsatz in einer ersten Richtung durch den Drucksensor; und
Bewegen des Cursors mittels der Elektronikvorrichtung von einer ersten Position in einer ersten Richtung in eine zweite Position auf der Anzeige ansprechend auf den Druck, der auf dem Aufsatz in der ersten Richtung erfaßt wird.

9. Das Verfahren gemäß Anspruch 8, das ferner folgenden Schritt aufweist:
Übertragen von Signalen, die dem auf dem Aufsatz erfaßten Druck entsprechen, von der Eingabevorrichtung zu der Elektronikvorrichtung von einem Infrarotport auf der Eingabevorrichtung (71) zu einem Infrarotport auf der Elektronikvorrichtung (81).

## Revendications

1. Un dispositif d'entrée (10) pour un dispositif électronique (80) à information affichée sur un affichage (83), ledit dispositif d'entrée comprenant:
un fourreau (11) qui peut être porté, et est fermé, autour de la pointe d'un doigt d'une personne, qui comprend en outre:
une capsule (15) située sur ledit fourreau; et
un capteur de pression (51 à 54) pour détecter une pression sur ladite capsule;
une interface (70) de dispositif électronique, couplée fonctionnellement audit capteur de pression pour envoyer des signaux audit dispositif électronique amenant un curseur qui y est affiché à se déplacer d'une première position vers une deuxième position dans une première direction, en réponse à la détection, par ledit capteur de pression, d'une pression sur ladite capsule dans ladite première direction.

2. Le dispositif d'entrée selon la revendication 1, dans lequel ledit fourreau est portable autour de la pointe de l'un des pouces d'une personne.

3. Le dispositif électronique selon la revendication 2, dans lequel ladite pression détectée sur ladite capsule est prévue pour être exercée par un index, d'une personne, qui vient par sa pointe au contact de la pointe dudit pouce de la personne.

4. Le dispositif électronique selon la revendication 1, dans lequel ledit capteur de pression détecte une pression dans une direction X et une direction Y sur ladite capsule.

5. Le dispositif d'entrée selon la revendication 1, qui comprend en outre:
une série de commutateurs (12, 13) contenus dans ledit fourreau.

6. Le dispositif électronique selon la revendication 1, dans lequel ladite interface de dispositif électronique est connectée audit fourreau et contenue dans ledit dispositif électronique.

7. Le dispositif d'entrée selon la revendication 1, dans lequel ladite interface de dispositif électronique comprend en outre:
un port (71) d'infrarouges, lesdits signaux étant envoyés audit dispositif électronique par l'intermédiaire dudit port à infrarouges.

8. Un procédé de déplacement d'un curseur affiché sur un affichage (83) d'un dispositif électronique (80) au moyen d'un dispositif d'entrée (10) qui inclut un fourreau (11) qui peut être porté, et est fermé, autour de la pointe d'un doigt d'une personne, ledit fourreau incluant une capsule (15) située sur ledit fourreau et un capteur de pression (51 à 54), ledit dispositif d'entrée étant connecté fonctionnellement audit dispositif électronique, ledit procédé comprenant les étapes consistant à:
détecter au moyen dudit capteur de pression, la pression sur ladite capsule dans une première direction; et
déplacer le curseur sur ledit affichage, au moyen dudit dispositif électronique, d'une première position vers une deuxième position dans une première direction en réponse à ladite pression détectée sur ladite capsule dans ladite première direction.

9. Le procédé selon la revendication 8, qui comprend en outre l'étape consistant à:
transmettre, dudit dispositif d'entrée audit dispositif électronique, des signaux correspondant à ladite pression détectée sur ladite capsule, à partir d'un port à infrarouges sur ledit dispositif d'entrée (71) vers un port à infrarouges sur ledit dispositif électronique (81).
